# EUROPEAN PATENT SPECIFICATION

(11) **EP 2 999 244 B1**
(45) Date of publication and mention of the grant of the patent: **08.11.2017**
(21) Application number: 13887760.0
(22) Date of filing: 28.06.2013
(51) Int. Cl.: H04W 8/06, H04W 8/12, H04W 88/16

(54) **DATA TRANSMISSION METHOD AND GATEWAY**
DATENÜBERTRAGUNGSVERFAHREN UND GATEWAY
PROCÉDÉ ET PASSERELLE DE TRANSMISSION DE DONNÉES

(43) Date of publication of application: 23.03.2016
(73) Proprietor: Huawei Technologies Co., Ltd., Longgang District Shenzhen, Guangdong 518129 (CN)
(72) Inventor: QU, Qin, Shenzhen Guangdong 518129 (CN); ZHANG, Chong, Shenzhen Guangdong 518129 (CN)
(74) Representative: Epping - Hermann - Fischer
(86) International application number: PCT/CN2013/078366
(87) International publication number: WO 2014/205778

(56) References cited:
- WO-A1-2012/095197
- WO-A2-2009/018533
- CN-A- 1 784 064
- CN-A- 101 064 936
- CN-A- 101 163 332
- US-A1- 2010 211 628
- US-A1- 2010 211 628
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.4.0, 18 December 2012 (2012-12-18), pages 1-284, XP050691115, [retrieved on 2012-12-18]

## Description

### TECHNICAL FIELD

The present invention relates to the field of communications, and in particular, to a data transmission method and a gateway.

### BACKGROUND

When a mobile operator establishes a large-scale general packet radio service (General Packet Radio Service, GPRS)/evolved packet core (Evoloved Packet Core, EPC), hierarchical networking is adopted for convenient management. For example, both GPRS/EPC networks of China Unicom and China Mobile are networked by taking province as a unit, and a provincial GPRS/EPC network is responsible for providing users in the province with a GPRS/EPC service. That is, a same public land mobile network (Public Land Mobile Network, PLMN) can be divided into GPRS/EPC networks of multiple subscription home location. General services include the following three cases, namely a service in a subscription home location of a certain PLMN; a service that roams to a non-home location but still belongs to the PLMN; and a service that roams to other PLMNs.

In an application scenario of a service that roams to a non-home PLMN, a service request initiated by a user equipment accesses a roaming location network by using a roaming location network device and is sent to a gateway of a gateway exchange, and is finally sent to an external packet data network (Packet Data Network, PDN) by using the gateway of the gateway exchange. The roaming location network device may be a serving GPRS support node (Serving GPRS Support Node, SGSN)/a serving gateway (Serving Gateway, S-GW); and the gateway of the gateway exchange may be a gateway GPRS support node (Gateway GPRS Support Node, GGSN)/ a PDN gateway (PDN Gateway, P-GW).

When the user equipment initiates an access request, it is required to designate an access point name (Access Point Name, APN) as an access point name, where the APN is used to identify a designated external network and an Internet service provider (Internet Server Provider, ISP) of a service. In the roaming network device, a gateway address of a gateway exchange corresponding to the APN may be obtained according to the APN and by parsing a DNS domain name.

Generally, the APN includes two types: a general APN that supports an entire network access, and a regional APN that supports a regional access. The general APN is used to connect the service request initiated by a user to the Internet by using a national GPRS/EPC network, and the regional APN is used to connect the service request initiated by the user to the Internet through a specific provincial GPRS/EPC network.

For a user roaming to a non-home PLMN network, if the general APN is used, a current processing method is performed by direct activation on the gateway of the gateway exchange, and cannot return to the GGSN/PGW of the subscription home location of the user. Although an object that a user returns to a home location GGSN/PGW during roaming may be achieved by setting an APN that carries a place name suffix on a mobile phone and canceling configuration of the general APN, APN management is increased by deriving multiple regional APNs from one general APN; for the user equipment, only a regional APN of a local subscription network can be seen, which is not beneficial for a mobile operator group company to establish a unified service development strategy.

WO 2009/018533 A2 discloses techniques for supporting roaming in wireless communication networks. In one design, an APN and a preferred roaming protocol for a user equipment UE roaming from a home network to a visited network may be obtained. The APN may be associated with a data service requested by the UE. The preferred roaming protocol may be GPRS Tunneling Protocol, GTP, Mobile Internet Protocol, MIP, Proxy Mobile Internet Protocol, PMIP, etc. A suitable network entity to provide data connectivity for the UE may be determined based on the APN and the preferred roaming protocol.

US 2010/0211628 A1 discloses a system and method for selecting a proxy gateway server for controlling data traffic initiated by a user device roaming on a visited network. The method includes utilizing a mobility anchor server associated with the visited network to receive a request to activate a data traffic session from a user device, identify the user device as a roaming user device, and select a proxy gateway server from one or more servers associated with the visited network for controlling the data traffic initiated by the roaming user device. The selection of a proxy server is accomplished by querying a DNS server associated with the visited network with a predefined roaming APN string associated with the visited network and, receiving an IP address of the proxy gateway server from the DNS server.

WO 2012/095197 A1 discloses a method in a second node in a visited network. The visited network is visited by a UE. The second node receives a message comprising subscription information. The subscription information comprises a parameter indicating that the UE is allowed to use a multimedia service in the home or the visited network. The second node selects a serving gateway in the visited network. Based on the parameter, the second node selects a visited PDN gateway in the visited network when the UE is allowed to use the multimedia service in the visited network. The second node selects a home PDN gateway in the home network when the UE is allowed to use the multimedia service in the home network.

### SUMMARY

Embodiments of the present invention provide a data transmission method, which aims at solving a problem of how a user roaming to a non-home PLMN accesses the Internet by using a general APN and a subscription network.

According to a first aspect, a data transmission method is provided, including:
receiving, by a first gateway, an activation request of a roaming location network device, where the activation request at least includes a subscriber identity and an access point name APN, and the subscriber identity is used to identify an identity of a user equipment;
acquiring, by the first gateway, a gateway address of a gateway of a subscription home location according to the subscriber identity and the APN in the activation request as well as a mapping relationship stored in advance in the first gateway,
wherein the mapping relationship is a relationship of the subscriber identity and the APN corresponding to the gateway address of the gateway of the subscription home location; and
transmitting, by the first gateway, data by using the gateway of the subscription home location.

In a first possible implementation manner of the first aspect, the transmitting data by using the gateway of the subscription home location, includes:
modifying, by the first gateway, a destination Internet Protocol IP address in the activation request to the gateway address of the gateway of the subscription home location, and sending the activation request to the gateway of the subscription home location, where the activation request carries a source address of the roaming location network device;
sending, by the first gateway, a first response message of the activation request returned by the gateway of the subscription home location to the roaming location network device, and forwarding, by the roaming location network device, the first response message to the user equipment, where the first response message carries the gateway address of the gateway of the subscription home location; and
directly transmitting data, by the user equipment according to the gateway address of the gateway of the subscription home location carried in the first response message and by using the gateway of the subscription home location.

In a second possible implementation manner of the first aspect, the transmitting data by using the gateway of the subscription home location, includes:
modifying, by the first gateway, a destination IP address in the activation request to the gateway address of the gateway of the subscription home location, modifying a source address of the roaming location network device carried in the activation request to the gateway address of the gateway, and sending a modified activation request to the gateway of the subscription home location;
sending, by the first gateway, a first response message of the activation request returned by the subscription home location to the roaming location network device, and forwarding, by the roaming location network device, the first response message to the user equipment, where the first response message carries the gateway address of the gateway; and
receiving, by the gateway, a service request sent by the user equipment, and sending the service request to the gateway of the subscription home location, so that the user equipment and the gateway of the subscription home location transmit data by using the gateway.

In a third possible implementation manner of the first aspect, the transmitting data by using the gateway of the subscription home location, includes:
sending, by the first gateway, a second response message to the roaming location network device, where the second response message is a response message of the gateway to the activation request, and the second response message carries the gateway address of the gateway of the subscription home location;
resending, by the roaming location network device, the activation request sent by the user equipment to the gateway of the subscription home location, and sending a first response request of the activation request returned by the gateway of the subscription home location to the user equipment, where the first response request carries the gateway address of the gateway of the subscription home location; and
directly transmitting data, by the user equipment according to the gateway address of the gateway of the subscription home location carried in the first response message and by using the gateway of the subscription home location.

According to a second aspect, a gateway is provided, including:
a receiving unit, configured to receive an activation request, where the activation request at least includes a subscriber identity and an access point name APN, and the subscriber identity is used to identify an identity of a user equipment;
an acquiring unit, configured to acquire a gateway address of a gateway of a subscription home location according to the subscriber identity and the APN in the activation request as well as a mapping relationship stored in advance in the first gateway, wherein the mapping relationship is a relationship of the subscriber identity and the APN corresponding to the gateway address of the gateway of the subscription home location; and
a processing unit, configured to transmit data by using the gateway of the subscription home location.

In a first possible implementation manner of the second aspect, the processing unit includes:
a first modifying unit, configured to modify a destination Internet Protocol IP address in the activation request to the gateway address of the gateway of the subscription home location, and send the activation request to the gateway of the subscription home location, where the activation request carries a source address of a roaming location network device; and
a sending unit, configured to send, by the gateway, a first response message of the activation request returned by the gateway of the subscription home location to the roaming location network device, where the roaming location network device forwards the first response message to the user equipment, and the first response message carries the gateway address of the gateway of the subscription home location, so that the user equipment directly transmits data according to the gateway address of the gateway of the subscription home location carried in the first response message and by using the gateway of the subscription home location.

In a second possible implementation manner of the second aspect, the processing unit includes:
a second modifying unit, configured to modify a destination IP address in the activation request to the gateway address of the gateway of the subscription home location, modify a source address of a roaming location network device carried in the activation request to the gateway address of the gateway, and send a modified activation request to the gateway of the subscription home location;
a sending unit, configured to send a first response message of the activation request returned by the subscription home location to the roaming location network device, where the roaming location network device forwards the first response message to the user equipment, and the first response message carries the gateway address of the gateway;
a receiving unit, configured to receive a service request sent by the user equipment; and
a sending unit, configured to send the service request to the gateway of the subscription home location, so that the user equipment and the gateway of the subscription home location transmit data by using the gateway.

In a third possible implementation manner of the second aspect, the processing unit includes:
a sending unit, configured to send a second response message to a roaming location network device, where the second response message is a response message of the gateway to the activation request, and the second response message carries the gateway address of the gateway of the subscription home location, so that the roaming location network device resends the activation request sent by the user equipment to the gateway of the subscription home location, and sends a first response request of the activation request returned by the gateway of the subscription home location to the user equipment, where the first response request carries the gateway address of the gateway of the subscription home location, and the user equipment directly transmits data according to the gateway address of the gateway of the subscription home location carried in the first response message and by using the gateway of the subscription home location.

The embodiments of the present invention provide a data transmission method. The method, by receiving an activation request, where the activation request at least includes a subscriber identity and an access point name APN, and the subscriber identity is used to identify an identity of a user equipment; and acquiring a gateway address of a gateway of a subscription home location according to the subscriber identity and the APN in the activation request, so that the user equipment and the gateway of the subscription home location transmit data, implements that there is only one APN for each type of common service. In this way, a quantity of APNs may be decreased, management on the APN is simplified, no change is required for a network structure, a general APN that needs to return to the subscription home location may be configured flexibly, only performing parsing the home location of the APN is required, and a signaling procedure may be simplified; thereby, a requirement for a processing capacity of a gateway device is reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an application scenario diagram of data transmission according to an embodiment of the present invention;
FIG. 2 is a flowchart of a data transmission method according to an embodiment of the present invention;
FIG. 3 is a schematic diagram of a data transmission method according to an embodiment of the present invention;
FIG. 4 is a schematic diagram of a data transmission method according to an embodiment of the present invention;
FIG. 5 is a schematic diagram of a data transmission method according to an embodiment of the present invention;
FIG. 6 is a structural diagram of an apparatus of a gateway according to an embodiment of the present invention;
FIG. 7 is a structural diagram of an apparatus of a gateway according to an embodiment of the present invention;
FIG. 8 is a structural diagram of an apparatus of a gateway according to an embodiment of the present invention;
FIG. 9 is a structural diagram of an apparatus of a gateway according to an embodiment of the present invention; and
FIG. 10 is a structural diagram of an apparatus of a gateway according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

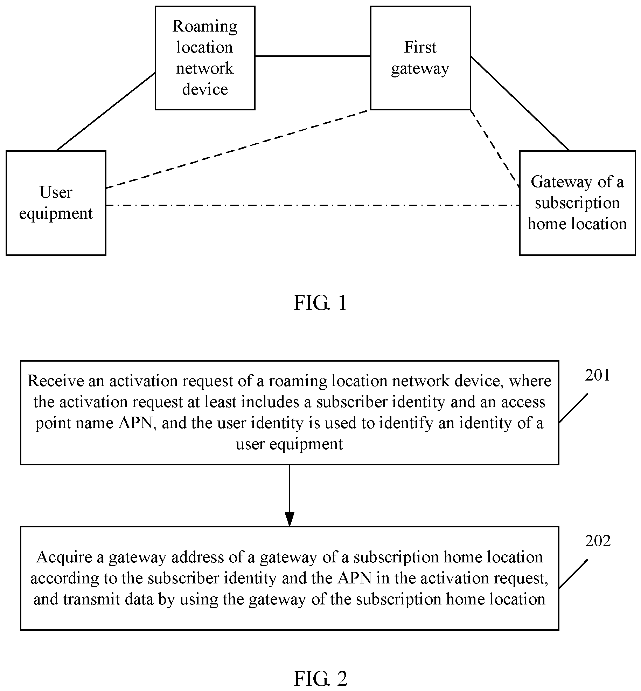

Refer to FIG. 1. As shown in FIG. 1, when a use roams to a non-home PLMN, a user equipment and a roaming location network device send an activation request, where the roaming location network device forwards the activation request to a first gateway, and the first gateway acquires a gateway address of a gateway of a subscription home location according to a subscriber identity and an access point name (Accesss Point Name, APN) in the activation request, so that the user equipment and the gateway of the subscription home location directly transmit data, which is shown in the dotted line in FIG. 1; or, so that the user equipment transmit the data by using the first gateway and the gateway of the subscription home location, which is, shown in the dotted line in FIG. 1.

In a 3G network, the roaming location network device may be an SGSN; and in a 4G network, the roaming location network device may be an MME.

Refer to FIG. 2 which is a flowchart of a data transmission method according to an embodiment of the present invention. As shown in FIG. 2, the method includes the following steps:
Step 201: receive an activation request of a roaming location network device, where the activation request at least includes a subscriber identity and an access point name APN, and the subscriber identity is used to identify an identity of a user equipment.

The subscriber identity is used to identify the identity of the user equipment; for example, the subscriber identity can be an international mobile subscriber identity (International Mobile Subscriber Identification, IMSI), or a mobile subscriber integrated services digital network (Mobile Station International ISDN Number, MSISDN).

Step 202: acquire a gateway address of a gateway of a subscription home location according to the subscriber identity and the APN in the activation request, and transmit data by using the gateway of the subscription home location.

Optionally, the acquiring a gateway address of a gateway of a subscription home location according to the subscriber identity and the APN in the activation request, includes:
acquiring the gateway address of the gateway of the subscription home location according to the subscriber identity and the APN in the activation request as well as a mapping relationship stored in advance on a domain name system DNS, where the mapping relationship is a relationship of the subscriber identity and the APN corresponding to the gateway address of the gateway of the subscription home location; alternatively,
acquiring the gateway address of the gateway of the subscription home location according to the subscriber identity and the APN in the activation request as well as a mapping relationship stored in advance, where the mapping relationship is a relationship of the subscriber identity and the APN corresponding to the gateway address of the gateway of the subscription home location.

According to a first embodiment, the transmitting data by using the gateway of the subscription home location, includes:
modifying, by a first gateway, a destination Internet Protocol IP address in the activation request to the gateway address of the gateway of the subscription home location, and sending the activation request to the gateway of the subscription home location, where the activation request carries a source address of the roaming location network device;
sending, by the first gateway, a first response message of the activation request returned by the gateway of the subscription home location to the roaming location network device, and forwarding, by the roaming location network device, the first response message to the user equipment, where the first response message carries the gateway address of the gateway of the subscription home location; and
directly transmitting data, by the user equipment according to the gateway address of the gateway of the subscription home location carried in the first response message and by using the gateway of the subscription home location.

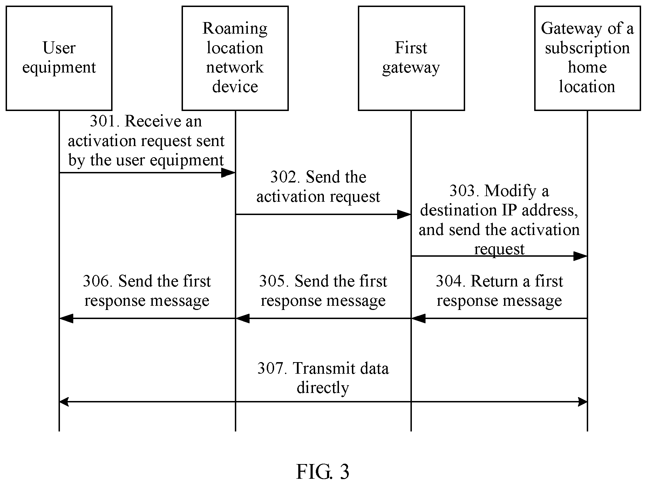

Specifically, refer to FIG. 3 which is a schematic diagram of a data transmission method according to an embodiment of the present invention. As shown in FIG. 3, the method includes the following steps:
Step 301: The roaming location network device receives, the activation request sent by the user equipment.
Step 302: The roaming location network device sends, the activation request to the first gateway.
   The first gateway is a proxy gateway device established in a gateway exchange, where the gateway device may be a network element entity with a proxy function, and also may be a network element entity with an integrated proxy function of a gateway of an existing standard gateway exchange.
Step 303: The first gateway modifies the destination Internet Protocol (Internet Protocol, IP) address in the activation request to the gateway address of the gateway of the subscription home location, and sends the activation request to the gateway of the subscription home location, where the activation request carries the source address of the roaming location network device. Specifically, the first gateway acquires the gateway address of the gateway of the subscription home location according to the subscriber identity and the APN in the activation request as well as the mapping relationship stored in advance on the DNS; alternatively,
   the gateway address of the gateway of the subscription home location acquired according to the subscriber identity and the APN in the activation request as well as a mapping relationship stored in advance on the first gateway.
Step 304: When the gateway of the subscription home location receives the activation request sent by the gateway, the source address of the roaming location network device is acquired from the activation request, and returns a first response message is to the first gateway, where the first response message carries the gateway address of the gateway of the subscription home location.
Step 305: The first gateway sends, the first response message to the roaming location network device.
Step 306: The roaming location network device sends the first response message to the user equipment.
Step 307: The user equipment receives the first response message, acquires the gateway address of the gateway of the subscription home location from the first response message, and directly transmits data with the user equipment according to the gateway address of the gateway of the subscription home location.

Because, in step 304, the gateway of the subscription home location has already acquired the source address of the roaming location network device, and in step 307, the user equipment has already acquired the gateway address of the gateway of the subscription home location, the user equipment and the gateway of the subscription home location may directly transmit data.

Step 304, step 305, step 306 and step 307 in the first embodiment are specific details of step 202 in the embodiment described in FIG. 2; and step 301, step 302, and step 303 are specific details of step 201 in the embodiment described in FIG. 2. Descriptions of specific steps in the first embodiment may refer to descriptions of relevant steps in FIG. 2.

According to a second embodiment, the transmitting data by using the gateway of the subscription home location, includes:
modifying, by a first gateway, a destination IP address in the activation request to the gateway address of the gateway of the subscription home location, modifying a source address of the roaming location network device carried in the activation request to the gateway address of the gateway, and sending a modified activation request to the gateway of the subscription home location;
sending, by the first gateway, a first response message of the activation request returned by the subscription home location to the roaming location network device, and forwarding, by the roaming location network device, the first response message to the user equipment, where the first response message carries the gateway address of the gateway; and
receiving, by the gateway, a service request sent by the user equipment, and sending the service request to the gateway of the subscription home location, so that the user equipment and the gateway of the subscription home location transmit data.

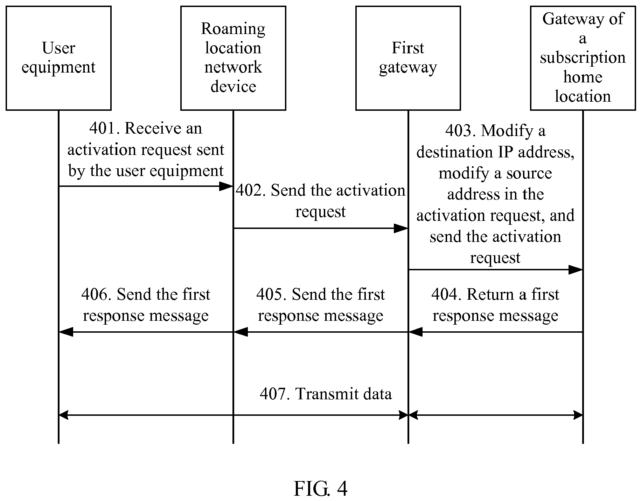

Specifically, refer to FIG. 4 which is a schematic diagram of a data transmission method according to an embodiment of the present invention. As shown in FIG. 4, the method includes the following steps:
Step 401: The roaming location network device receives the activation request sent by the user equipment.
Step 402: The roaming location network device sends the activation request to a gateway.
Step 403: The first gateway modifies, a destination Internet Protocol (Internet Protocol, IP) address in the activation request to the gateway address of the gateway of the subscription home location, modifies the source address of the roaming location network device carried in the activation request to the gateway address of the gateway, and sends the activation request to the gateway of the subscription home location.
   Specifically, the first gateway acquires the gateway address of the gateway of the subscription home location according to the subscriber identity and the APN in the activation request as well as a mapping relationship stored in advance on the DNS; alternatively,
   the first gateway acquires the gateway address of the gateway of the subscription home location according to the subscriber identity and the APN in the activation request as well as a mapping relationship stored in advance on the first gateway.
Step 404: The gateway of the subscription home location returns a first response message to the first gateway, where the first response message carries a gateway address of the first gateway. Step 405: The first gateway sends the first response message to the roaming location network device.
Step 406: The roaming location network device sends the first response message to the user equipment.
Step 407: The user equipment receives the first response message, acquire the gateway address of the first gateway from the first response message, and directly transmit data with the gateway of the subscription home location by using the first gateway.

Because, in step 404, the activation request has not carried the source address of the roaming location network device, the gateway of the subscription home location cannot acquire the source address of the roaming location network device; however, the gateway may acquire the source address of the roaming location network device and the gateway address of the gateway of the subscription home location. Therefore, the roaming location network device may transmit data by using the first gateway and the gateway of the subscription home location.

Therefore, in the step 407, the user equipment may transmit data by using the first gateway and the gateway of the subscription home location.

Step 404, step 405, step 406, and step 407 in the second embodiment are specific details of step 202 in the embodiment described in FIG. 2; and step 401, step 402, and step 403 are specific details of step 201 in the embodiment described in FIG. 2. Descriptions of specific steps in the second embodiment may refer to descriptions of relevant steps in FIG. 2.

According to a third embodiment, the transmitting data by using the gateway of the subscription home location, includes:
sending, by a first gateway, a second response message to the roaming location network device, where the second response message is a response message of the gateway to the activation request, and the second response message carrys the gateway address of the gateway of the subscription home location to;
resending, by the roaming location network device, the activation request sent by the user equipment to the gateway of the subscription home location, and sending a first response request of the activation request returned by the gateway of the subscription home location to the user equipment, where the first response request carries the gateway address of the gateway of the subscription home location; and
directly transmitting data, by the user equipment according to the gateway address of the gateway of the subscription home location carried in the first response message and by using the gateway of the subscription home location.

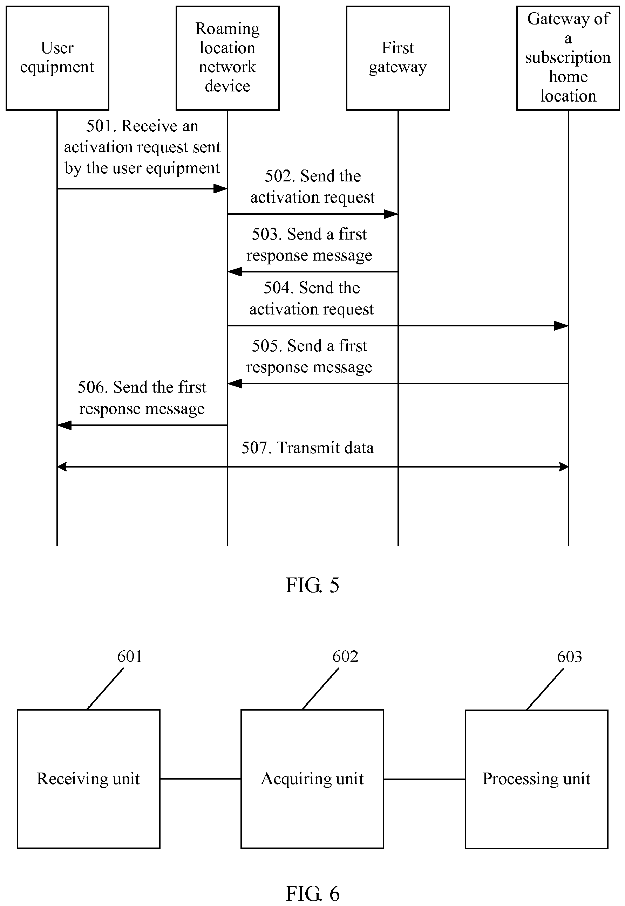

Specifically, refer to FIG. 5 which is a schematic diagram of a data transmission method according to an embodiment of the present invention. As shown in FIG. 5, the method includes the following steps:
Step 501: The roaming location network device receives the activation request sent by the user equipment.
Step 502: The roaming location network device sends the activation request to a gateway.
Step 503: The first gateway sends the second response message to the roaming location network device, where the second response message is a response message of the first gateway to the activation request, and the second response message carries the gateway address of the gateway of the subscription home location.
   Specifically, the gateway acquires the gateway address of the gateway of the subscription home location according to the subscriber identity and the APN in the activation request as well as a mapping relationship stored in advance on the DNS; alternatively,
   the gateway acquires the gateway address of the gateway of the subscription home location according to the subscriber identity and the APN in the activation request as well as a mapping relationship stored in advance on the first gateway.
Step 504: The roaming location network device acquires the gateway address of the gateway of the subscription home location according to the second response message, and sends the activation request to the gateway of the subscription home location according to the gateway address of the gateway of the subscription home location.
Step 505: The gateway of the subscription home location sends a first response request to the roaming location network device, where the first response request carries the gateway address of the gateway of the subscription home location.
Step 506: The roaming location network device forwards the first response message to the user equipment.
   After receiving the first response request, the user equipment acquires the gateway address of the gateway of the subscription home location according to the first response request.
Step 507: The user equipment and the gateway of the subscription home location directly transmit data.

Because, in step 504, the roaming location network device has already acquired the gateway address of the gateway of the subscription home location; and in step 304, the gateway of the subscription home location has already acquired the source address of the roaming location network device, the user equipment and the gateway of the subscription home location may directly transmit data.

Step 504, step 505, step 506, and step 507 in the third embodiment are specific details of step 202 in the embodiment described in FIG. 2; and step 501, step 502, and step 503 are specific details of step 201 in the embodiment described in FIG. 2. Descriptions of specific steps in the third embodiment may refer to descriptions of relevant steps in FIG. 2.

This embodiment of the present invention provides a data transmission method. The method, by receiving an activation request, where the activation request at least includes a subscriber identity and an access point name APN, and the subscriber identity is used to identify an identity of a user equipment; and acquiring a gateway address of a gateway of a subscription home location according to the subscriber identity and the APN in the activation request, so that the user equipment and the gateway of the subscription home location transmit data, implements that there is only one APN for each type of common service. In this way, a quantity of APNs may be decreased, management on the APN is simplified, no change is required for a network structure, a general APN that needs to return to the subscription home location may be configured flexibly, only performing parsing the home location of the APN is required, and a signaling procedure may be simplified; thereby, a requirement for a processing capacity of a gateway device is reduced.

Refer to FIG. 6 which is a structural diagram of an apparatus of a gateway according to an embodiment of the present invention. As shown in FIG. 6, the gateway includes the following units:
a receiving unit 601, configured to receive an activation request, where the activation request at least includes a subscriber identity and an access point name APN, and the subscriber identity is used to identify an identity of a user equipment;
an acquiring unit 602, configured to acquire a gateway address of a gateway of a subscription home location according to the subscriber identity and the APN in the activation request; and
a processing unit, configured to transmit data by using the gateway of the subscription home location.

Specifically, the acquiring unit 602 is specifically configured to:
acquire the gateway address of the gateway of the subscription home location according to the subscriber identity and the APN in the activation request as well as a mapping relationship stored in advance on a domain name system DNS, where the mapping relationship is a relationship of the subscriber identity and the APN corresponding to the gateway address of the gateway of the subscription home location; alternatively,
acquire the gateway address of the gateway of the subscription home location according to the subscriber identity and the APN in the activation request as well as a mapping relationship stored in advance, where the mapping relationship is a relationship of the subscriber identity and the APN corresponding to the gateway address of the gateway of the subscription home location.

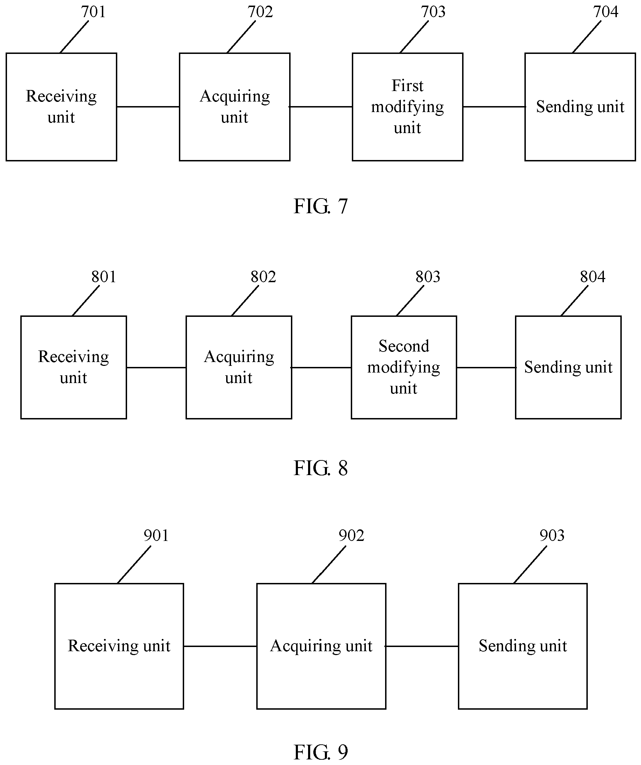

According to a first embodiment, referring to FIG. 7 which is a structural diagram of an apparatus of a gateway according to an embodiment of the present invention. As shown in FIG. 7, the gateway includes the following units:
a receiving unit 701, configured to receive the activation request, where the activation request at least includes the subscriber identity and the access point name APN, and the subscriber identity is used to identify the identity of the user equipment;
an acquiring unit 702, configured to acquire the gateway address of the gateway of the subscription home location according to the subscriber identity and the APN in the activation request, so that the user equipment and the gateway of the subscription home location transmit data;
a first modifying unit 703, configured to modify a destination Internet Protocol IP address in the activation request to the gateway address of the gateway of the subscription home location, and send the activation request to the gateway of the subscription home location, where the activation request carries a source address of a roaming location network device; and
a sending unit 704, configured to send, by the gateway, a first response message of the activation request returned by the gateway of the subscription home location to the roaming location network device, where the roaming location network device forwards the first response message to the user equipment, and the first response message carries the gateway address of the gateway of the subscription home location, so that the user equipment directly transmits data according to the gateway address of the gateway of the subscription home location carried in the first response message and by using the gateway of the subscription home location.

According to a second embodiment, referring to FIG. 8 which is a structural diagram of an apparatus of a gateway according to an embodiment of the present invention. As shown in FIG. 8, the gateway includes the following units:
a receiving unit 801, configured to receive the activation request, where the activation request at least includes the subscriber identity and the access point name APN, and the subscriber identity is used to identify the identity of the user equipment;
an acquiring unit 802, configured to acquire the gateway address of the gateway of the subscription home location according to the subscriber identity and the APN in the activation request, so that the user equipment and the gateway of the subscription home location transmit data;
a second modifying unit 803, configured to modify a destination IP address in the activation request to the gateway address of the gateway of the subscription home location, modify a source address of a roaming location network device carried in the activation request to the gateway address of the gateway, and send a modified activation request to the gateway of the subscription home location;
a sending unit 804, configured to send a first response message of the activation request returned by the subscription home location to the roaming location network device, where the roaming location network device forwards the first response message to the user equipment, and the first response message carries the gateway address of the gateway;
a receiving unit 801, configured to receive a service request sent by the user equipment; and
a sending unit 804, configured to send the service request to the gateway of the subscription home location, so that the user equipment and the gateway of the subscription home location transmit data by using the gateway.

According to a third embodiment, referring to FIG. 9 which is a structural diagram of an apparatus of a gateway according to an embodiment of the present invention. As shown in FIG. 9, the gateway includes the following units:
a receiving unit 901, configured to receive the activation request, where the activation request at least includes the subscriber identity and the access point name APN, and the subscriber identity is used to identify the identity of the user equipment;
an acquiring unit 902, configured to acquire the gateway address of the gateway of the subscription home location according to the subscriber identity and the APN in the activation request, so that the user equipment and the gateway of the subscription home location transmit data; and
a sending unit 903, configured to send a second response message to a roaming location network device, where the second response message is a response message of the gateway to the activation request, and the second response message carries the gateway address of the gateway of the subscription home location, so that the roaming location network device resends the activation request sent by the user equipment to the gateway of the subscription home location, and sends a first response request of the activation request returned by the gateway of the subscription home location to the user equipment, where the first response request carries the gateway address of the gateway of the subscription home location, and the user equipment directly transmits data according to the gateway address of the gateway of the subscription home location carried in the first response message and by using the gateway of the subscription home location.

For the first embodiment, the second embodiment and the third embodiment mentioned above, reference may be made to FIG. 3, FIG. 4 and FIG. 5 of the method embodiments.

This embodiment of the present invention provides a gateway. The gateway, by receiving an activation request, where the activation request at least includes a subscriber identity and an access point name APN, and the subscriber identity is used to identify an identity of a user equipment; and acquiring a gateway address of a gateway of a subscription home location according to the subscriber identity and the APN in the activation request, so that the user equipment and the gateway of the subscription home location transmit data, implements that there is only one APN for each type of common service. In this way, a quantity of APNs may be decreased, management on the APN is simplified, no change is required for a network structure, a general APN that needs to return to the subscription home location may be configured flexibly, only performing parsing the home location of the APN is required, and a signaling procedure may be simplified; thereby, a requirement for a processing capacity of a gateway device is reduced.

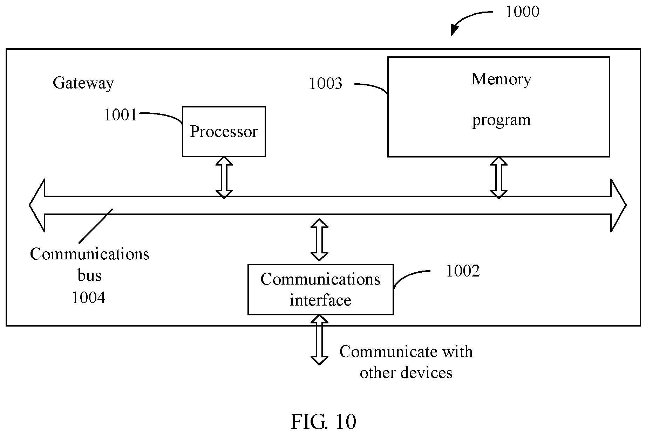

FIG. 10 is structural diagram of an apparatus of a gateway according to an embodiment of the present invention. Refer to FIG. 10 which is a gateway 1000 according to this embodiment of the present invention. A specific embodiment of the present invention constitutes no limitation on specific implementation of the gateway. The gateway 1000 includes:
a processor (processor) 1001, a communications interface (Communications Interface) 1002, a memory (memory) 1003, and a bus 1004.

The processor 1001, the communications interface 1002 and the memory 1003 complete mutual communication by using the bus 1004.

The communications interface 1002 is configured to communicate with other devices.

The processor 1001 is configured to execute programs.

Specifically, the program may include a program code, where the program code includes a computer operation instruction.

The processor 1001 may be a central processing unit (central processing unit, CPU), or an application specific integrated circuit ASIC (Application Specific Integrated Circuit), or one or more integrated circuits that are configured into one or more integrated circuits in this embodiment of the present invention.

The memory 1003 is configured to store programs. The memory 1003 may be a volatile memory (volatile memory); for example, a random-access memory (random-access memory, RAM), or a non-volatile memory (non-volatile memory), such as a read-only memory (read-only memory, ROM), a flash memory (flash memory), a hard disk drive (hard disk drive, HDD), or a solid-state drive (solid-state drive, SSD). The processor 1001 executes the following method according to a program instruction stored on the memory 1003:
receiving an activation request of a roaming location network device, where the activation request at least includes a subscriber identity and an access point name APN, and the subscriber identity is used to identify an identity of a user equipment; and
acquiring a gateway address of a gateway of a subscription home location according to the subscriber identity and the APN in the activation request, and transmitting data by using the gateway of the subscription home location.

The acquiring a gateway address of a gateway of a subscription home location according to the subscriber identity and the APN in the activation request, includes:
acquiring the gateway address of the gateway of the subscription home location according to the subscriber identity and the APN in the activation request as well as a mapping relationship stored in advance on a domain name system DNS, where the mapping relationship is a relationship of the subscriber identity and the APN corresponding to the gateway address of the gateway of the subscription home location; alternatively,
acquiring the gateway address of the gateway of the subscription home location according to the subscriber identity and the APN in the activation request as well as a mapping relationship stored in advance, where the mapping relationship is a relationship of the subscriber identity and the APN corresponding to the gateway address of the gateway of the subscription home location.

The transmitting data by using the gateway of the subscription home location, includes:
modifying, by a first gateway, a destination Internet Protocol IP address in the activation request to the gateway address of the gateway of the subscription home location, and sending the activation request to the gateway of the subscription home location, where the activation request carries a source address of the roaming location network device;
sending, by the first gateway, a first response message of the activation request returned by the gateway of the subscription home location to the roaming location network device, and forwarding, by the roaming location network device, the first response message to the user equipment, where the first response message carries the gateway address of the gateway of the subscription home location; and
directly transmitting data, by the user equipment according to the gateway address of the gateway of the subscription home location carried in the first response message and by using the gateway of the subscription home location.

The transmitting data by using the gateway of the subscription home location, includes:
modifying, by a first gateway, a destination IP address in the activation request to the gateway address of the gateway of the subscription home location, modifying a source address of the roaming location network device carried in the activation request to the gateway address of the gateway, and sending a modified activation request to the gateway of the subscription home location;
sending, by the first gateway, a first response message of the activation request returned by the subscription home location to the roaming location network device, and forwarding, by the roaming location network device, the first response message to the user equipment, where the first response message carries the gateway address of the gateway; and
receiving, by the gateway, a service request sent by the user equipment, and sending the service request to the gateway of the subscription home location, so that the user equipment and the gateway of the subscription home location transmit data by using the gateway.

The transmitting data by using the gateway of the subscription home location, includes:
sending, by a first gateway, a second response message to the roaming location network device, where the second response message is a response message of the gateway to the activation request, and the second response message carries the gateway address of the gateway of the subscription home location;
resending, by the roaming location network device, the activation request sent by the user equipment to the gateway of the subscription home location, and sending a first response request of the activation request returned by the gateway of the subscription home location to the user equipment, where the first response request carries the gateway address of the gateway of the subscription home location; and
directly transmitting data, by the user equipment according to the gateway address of the gateway of the subscription home location carried in the first response message and by using the gateway of the subscription home location.

This embodiment of the present invention provides a gateway. The gateway, by receiving an activation request, where the activation request at least includes a subscriber identity and an access point name APN, and the subscriber identity is used to identify an identity of a user equipment; and acquiring a gateway address of a gateway of a subscription home location according to the subscriber identity and the APN in the activation request, so that the user equipment and the gateway of the subscription home location transmit data, implements that there is only one APN for each type of common service. In this way, a quantity of APNs may be decreased, management on the APN is simplified, no change is required for a network structure, a general APN that needs to return to the subscription home location may be configured flexibly, only performing parsing the home location of the APN is required, and a signaling procedure may be simplified; thereby, a requirement for a processing capacity of a gateway device is reduced.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
receiving (201), by a first gateway, an activation request of a roaming location network device, wherein the activation request at least comprises a subscriber identity and an access point name, APN, and the subscriber identity is used to identify an identity of a user equipment;
acquiring (202), by the first gateway, a gateway address of a gateway of a subscription home location according to the subscriber identity and the APN in the activation request as well as a mapping relationship stored in advance in the first gateway, wherein the mapping relationship is a relationship of the subscriber identity and the APN corresponding to the gateway address of the gateway of the subscription home location; and
transmitting, by the first gateway, data by using the gateway of the subscription home location.

2. The method according to claim 1, wherein the transmitting data by using the gateway of the subscription home location, comprises:
modifying, by the first gateway, a destination Internet Protocol IP address in the activation request to the gateway address of the gateway of the subscription home location, and sending the activation request to the gateway of the subscription home location, wherein the activation request carries a source address of the roaming location network device;
sending, by the first gateway, a first response message of the activation request returned by the gateway of the subscription home location to the roaming location network device, and forwarding, by the roaming location network device, the first response message to the user equipment, wherein the first response message carries the gateway address of the gateway of the subscription home location; and
directly transmitting data, by the user equipment according to the gateway address of the gateway of the subscription home location carried in the first response message and by using the gateway of the subscription home location.

3. The method according to claim 1, wherein the transmitting data by using the gateway of the subscription home location, comprises:
modifying, by the first gateway, a destination IP address in the activation request to the gateway address of the gateway of the subscription home location, modifying a source address of the roaming location network device carried in the activation request to the gateway address of the gateway, and sending a modified activation request to the gateway of the subscription home location;
sending, by the first gateway, a first response message of the activation request returned by the subscription home location to the roaming location network device, and forwarding, by the roaming location network device, the first response message to the user equipment, wherein the first response message carries the gateway address of the gateway; and
receiving, by the gateway, a service request sent by the user equipment, and sending the service request to the gateway of the subscription home location, so that the user equipment and the gateway of the subscription home location transmit data by using the gateway.

4. The method according to claim 1, wherein the transmitting data by using the gateway of the subscription home location, comprises:
sending, by the first gateway, a second response message to the roaming location network device, wherein the second response message is a response message of the gateway to the activation request, and the second response message carries the gateway address of the gateway of the subscription home location;
resending, by the roaming location network device, the activation request sent by the user equipment to the gateway of the subscription home location, and sending a first response request of the activation request returned by the gateway of the subscription home location to the user equipment, wherein the first response request carries the gateway address of the gateway of the subscription home location; and
directly transmitting data, by the user equipment according to the gateway address of the gateway of the subscription home location carried in the first response message and by using the gateway of the subscription home location.

5. A gateway, comprising:
a receiving unit (601), configured to receive an activation request, wherein the activation request at least comprises a subscriber identity and an access point name APN, and the subscriber identity is used to identify an identity of a user equipment;
an acquiring unit (602), configured to acquire a gateway address of a gateway of a subscription home location according to the subscriber identity and the APN in the activation request as well as a mapping relationship stored in advance in the first gateway, wherein the mapping relationship is a relationship of the subscriber identity and the APN corresponding to the gateway address of the gateway of the subscription home location; and
a processing unit (603), configured to transmit data by using the gateway of the subscription home location.

6. The gateway according to claim 5, wherein the processing unit comprises:
a first modifying unit (703), configured to modify a destination Internet Protocol IP address in the activation request to the gateway address of the gateway of the subscription home location, and send the activation request to the gateway of the subscription home location, wherein the activation request carries a source address of a roaming location network device; and
a sending unit (704), configured to send, by the gateway, a first response message of the activation request returned by the gateway of the subscription home location to the roaming location network device, wherein the roaming location network device forwards the first response message to the user equipment, and the first response message carries the gateway address of the gateway of the subscription home location, so that the user equipment directly transmits data according to the gateway address of the gateway of the subscription home location carried in the first response message and by using the gateway of the subscription home location.

7. The gateway according to claim 5, wherein the processing unit comprises:
a second modifying unit (803), configured to modify a destination IP address in the activation request to the gateway address of the gateway of the subscription home location, modify a source address of a roaming location network device carried in the activation request to the gateway address of the gateway, and send a modified activation request to the gateway of the subscription home location;
a sending unit (804), configured to send a first response message of the activation request returned by the subscription home location to the roaming location network device, wherein the roaming location network device forwards the first response message to the user equipment, and the first response message carries the gateway address of the gateway;
a receiving unit, configured to receive a service request sent by the user equipment; and
a sending unit, configured to send the service request to the gateway of the subscription home location, so that data is transmitted by the user equipment and the gateway of the subscription home location by using the gateway.

8. The gateway according to claim 5, wherein the processing unit comprises:
a sending unit (903), configured to send a second response message to a roaming location network device, wherein the second response message is a response message of the gateway to the activation request, and the second response message carries the gateway address of the gateway of the subscription home location, so that the roaming location network device resends the activation request sent by the user equipment to the gateway of the subscription home location, and sends a first response request of the activation request returned by the gateway of the subscription home location to the user equipment, wherein the first response request carries the gateway address of the gateway of the subscription home location, and the user equipment directly transmits data according to the gateway address of the gateway of the subscription home location carried in the first response message and by using the gateway of the subscription home location.

## Patentansprüche

1. Datenübertragungsverfahren, das Folgendes umfasst:
Empfangen (201), durch einen ersten Gateway, einer Aktivierungsanforderung einer Roaming-Standort-Netzwerk-Vorrichtung, wobei die Aktivierungsanforderung mindestens eine Teilnehmer-Identität und einen Zugangspunktnamen (Access Point Name, APN) umfasst, und die Teilnehmer-Identität dafür verwendet wird, eine Identität eines Nutzergerätes zu identifizieren;
Erfassen (202), durch den ersten Gateway, einer Gateway-Adresse eines Gateways eines Teilnahme-Heimatstandortes gemäß der Teilnehmer-Identität und dem APN in der Aktivierungsanforderung sowie einer im Voraus in dem ersten Gateway gespeicherten Abbildungsbeziehung,
wobei die Abbildungsbeziehung eine Beziehung der Teilnehmer-Identität und des APN ist, der der Gateway-Adresse des Gateways des Teilnahme-Heimatstandortes entspricht; und
Senden, durch den ersten Gateway, von Daten unter Verwendung des Gateways des Teilnahme-Heimatstandortes.

2. Verfahren nach Anspruch 1, wobei das Senden von Daten unter Verwendung des Gateways des Teilnahme-Heimatstandortes Folgendes umfasst:
Modifizieren, durch den ersten Gateway, einer Zielort-Internetprotokoll(IP)-Adresse in der Aktivierungsanforderung zu der Gateway-Adresse des Gateways des Teilnahme-Heimatstandortes, und Senden der Aktivierungsanforderung zu dem Gateway des Teilnahme-Heimatstandortes, wobei die Aktivierungsanforderung eine Ursprungsadresse der Roaming-Standort-Netzwerk-Vorrichtung transportiert;
Senden, durch den ersten Gateway, einer ersten Antwortnachricht der Aktivierungsanforderung, die durch den Gateway des Teilnahme-Heimatstandortes zurückgesendet wurde, zu der Roaming-Standort-Netzwerk-Vorrichtung, und Weiterleiten, durch die Roaming-Standort-Netzwerk-Vorrichtung, der ersten Antwortnachricht zu dem Nutzergerät, wobei die erste Antwortnachricht die Gateway-Adresse des Gateways des Teilnahme-Heimatstandortes transportiert; und
direktes Senden von Daten durch das Nutzergerät gemäß der Gateway-Adresse des Gateways des in der ersten Antwortnachricht transportierten Teilnahme-Heimatstandortes und unter Verwendung des Gateways des Teilnahme-Heimatstandortes.

3. Verfahren nach Anspruch 1, wobei das Senden von Daten unter Verwendung des Gateways des Teilnahme-Heimatstandortes Folgendes umfasst:
Modifizieren, durch den ersten Gateway, einer Zielort-IP-Adresse in der Aktivierungsanforderung zu der Gateway-Adresse des Gateways des Teilnahme-Heimatstandortes, Modifizieren einer in der Aktivierungsanforderung transportierten Ursprungsadresse der Roaming-Standort-Netzwerk-Vorrichtung zu der Gateway-Adresse des Gateways, und Senden einer modifizierten Aktivierungsanforderung zu dem Gateway des Teilnahme-Heimatstandortes;
Senden, durch den ersten Gateway, einer ersten Antwortnachricht der Aktivierungsanforderung, die durch den Teilnahme-Heimatstandort zurückgesendet wurde, zu der Roaming-Standort-Netzwerk-Vorrichtung, und Weiterleiten, durch die Roaming-Standort-Netzwerk-Vorrichtung, der ersten Antwortnachricht zu dem Nutzergerät, wobei die erste Antwortnachricht die Gateway-Adresse des Gateways transportiert; und
Empfangen, durch den Gateway, einer durch das Nutzergerät gesendeten Dienstanforderung, und Senden der Dienstanforderung zu dem Gateway des Teilnahme-Heimatstandortes, so dass das Nutzergerät und der Gateway des Teilnahme-Heimatstandortes Daten unter Verwendung des Gateways senden.

4. Verfahren nach Anspruch 1, wobei das Senden von Daten unter Verwendung des Gateways des Teilnahme-Heimatstandortes Folgendes umfasst:
Senden, durch den ersten Gateway, einer zweiten Antwortnachricht zu der Roaming-Standort-Netzwerk-Vorrichtung, wobei die zweite Antwortnachricht eine Antwortnachricht des Gateways auf die Aktivierungsanforderung ist, und die zweite Antwortnachricht die Gateway-Adresse des Gateways des Teilnahme-Heimatstandortes transportiert;
erneutes Senden, durch die Roaming-Standort-Netzwerk-Vorrichtung, der durch das Nutzergerät gesendeten Aktivierungsanforderung zu dem Gateway des Teilnahme-Heimatstandortes, und Senden einer ersten Antwortanforderung der Aktivierungsanforderung, die durch den Gateway des Teilnahme-Heimatstandortes zurückgesendet wurde, zu dem Nutzergerät, wobei die erste Antwortanforderung die Gateway-Adresse des Gateways des Teilnahme-Heimatstandortes transportiert; und
direktes Senden von Daten durch das Nutzergerät gemäß der Gateway-Adresse des Gateways des in der ersten Antwortnachricht transportierten Teilnahme-Heimatstandortes und unter Verwendung des Gateways des Teilnahme-Heimatstandortes.

5. Gateway, der Folgendes umfasst:
eine Empfangseinheit (601), die dafür konfiguriert ist, eine Aktivierungsanforderung zu empfangen, wobei die Aktivierungsanforderung mindestens eine Teilnehmer-Identität und einen Zugangspunktnamen (APN) umfasst, und die Teilnehmer-Identität dafür verwendet wird, eine Identität eines Nutzergerätes zu identifizieren;
eine Erfassungseinheit (602), die dafür konfiguriert ist, eine Gateway-Adresse eines Gateways eines Teilnahme-Heimatstandortes gemäß der Teilnehmer-Identität und dem APN in der Aktivierungsanforderung sowie einer im Voraus in dem ersten Gateway gespeicherten Abbildungsbeziehung zu erfassen,
wobei die Abbildungsbeziehung eine Beziehung der Teilnehmer-Identität und des APN ist, der der Gateway-Adresse des Gateways des Teilnahme-Heimatstandortes entspricht;
und eine Verarbeitungseinheit (603), die dafür konfiguriert ist, Daten unter Verwendung des Gateways des Teilnahme-Heimatstandortes zu senden.

6. Gateway nach Anspruch 5, wobei die Verarbeitungseinheit Folgendes umfasst:
eine erste Modifizierungseinheit (703), die dafür konfiguriert ist, eine Zielort-Internetprotokoll(IP)-Adresse in der Aktivierungsanforderung zu der Gateway-Adresse des Gateways des Teilnahme-Heimatstandortes zu modifizieren und die Aktivierungsanforderung zu dem Gateway des Teilnahme-Heimatstandortes zu senden, wobei die Aktivierungsanforderung eine Ursprungsadresse einer Roaming-Standort-Netzwerk-Vorrichtung transportiert; und
eine Sendeeinheit (704), die dafür konfiguriert ist, durch den Gateway eine erste Antwortnachricht der Aktivierungsanforderung, die durch den Gateway des Teilnahme-Heimatstandortes zurückgesendet wurde, zu der Roaming-Standort-Netzwerk-Vorrichtung zu senden, wobei die Roaming-Standort-Netzwerk-Vorrichtung die erste Antwortnachricht zu dem Nutzergerät weiterleitet, und die erste Antwortnachricht die Gateway-Adresse des Gateways des Teilnahme-Heimatstandortes transportiert, so dass das Nutzergerät direkt Daten gemäß der Gateway-Adresse des Gateways des in der ersten Antwortnachricht transportierten Teilnahme-Heimatstandortes und unter Verwendung des Gateways des Teilnahme-Heimatstandortes sendet.

7. Gateway nach Anspruch 5, wobei die Verarbeitungseinheit Folgendes umfasst:
eine zweite Modifizierungseinheit (803), die dafür konfiguriert ist, eine Zielort-IP-Adresse in der Aktivierungsanforderung zu der Gateway-Adresse des Gateways des Teilnahme-Heimatstandortes zu modifizieren, eine in der Aktivierungsanforderung transportierte Ursprungsadresse einer Roaming-Standort-Netzwerk-Vorrichtung zu der Gateway-Adresse des Gateways zu modifizieren, und eine modifizierte Aktivierungsanforderung zu dem Gateway des Teilnahme-Heimatstandortes zu senden;
eine Sendeeinheit (804), die dafür konfiguriert ist, eine erste Antwortnachricht der Aktivierungsanforderung, die durch den Teilnahme-Heimatstandort zurückgesendet wurde, zu der Roaming-Standort-Netzwerk-Vorrichtung zu senden, wobei die Roaming-Standort-Netzwerk-Vorrichtung die erste Antwortnachricht zu dem Nutzergerät weiterleitet und die erste Antwortnachricht die Gateway-Adresse des Gateways transportiert;
eine Empfangseinheit, die dafür konfiguriert ist, eine durch das Nutzergerät gesendete Dienstanforderung zu empfangen; und
eine Sendeeinheit, die dafür konfiguriert ist, die Dienstanforderung zu dem Gateway des Teilnahme-Heimatstandortes zu senden, so dass Daten durch das Nutzergerät und den Gateway des Teilnahme-Heimatstandortes unter Verwendung des Gateways gesendet werden.

8. Gateway nach Anspruch 5, wobei die Verarbeitungseinheit Folgendes umfasst:
eine Sendeeinheit (903), die dafür konfiguriert ist, eine zweite Antwortnachricht an eine Roaming-Standort-Netzwerk-Vorrichtung zu senden, wobei die zweite Antwortnachricht eine Antwortnachricht des Gateways auf die Aktivierungsanforderung ist, und die zweite Antwortnachricht die Gateway-Adresse des Gateways des Teilnahme-Heimatstandortes transportiert, so dass die Roaming-Standort-Netzwerk-Vorrichtung die durch das Nutzergerät gesendete Aktivierungsanforderung erneut zu dem Gateway des Teilnahme-Heimatstandortes sendet und eine erste Antwortanforderung der Aktivierungsanforderung, die durch den Gateway des Teilnahme-Heimatstandortes zurückgesendet wurde, zu dem Nutzergerät sendet, wobei die erste Antwortanforderung die Gateway-Adresse des Gateways des Teilnahme-Heimatstandortes transportiert und das Nutzergerät direkt Daten gemäß der Gateway-Adresse des Gateways des in der ersten Antwortnachricht transportierten Teilnahme-Heimatstandortes und unter Verwendung des Gateways des Teilnahme-Heimatstandortes sendet.

## Revendications

1. Procédé de transmission de données, comprenant :
la réception (201), par une première passerelle, d'une demande d'activation d'un dispositif de réseau à localisation itinérante, dans lequel la demande d'activation comprend au moins une identité d'abonné et un nom de point d'accès, APN (Access Point Name), et l'identité d'abonné est utilisée pour identifier une identité d'un équipement utilisateur ;
l'acquisition (202), par la première passerelle, d'une adresse de passerelle d'une passerelle d'une localisation nominale d'abonné conformément à l'identité d'abonné et à l'APN contenu dans la demande d'activation ainsi qu'à une relation de mise en correspondance stockée à l'avance dans la première passerelle,
dans lequel la relation de mise en correspondance est une relation entre l'identité d'abonné et l'APN correspondant à l'adresse de passerelle de la passerelle de la localisation nominale d'abonné ; et
la transmission, par la première passerelle, de données par utilisation de la passerelle de la localisation nominale d'abonné.

2. Procédé selon la revendication 1, dans lequel la transmission de données par utilisation de la passerelle de la localisation nominale d'abonné comprend :
la modification, par la première passerelle, d'une adresse de protocole Internet IP de destination contenue dans la demande d'activation en l'adresse de passerelle de la passerelle de la localisation nominale d'abonné, et l'envoi de la demande d'activation à la passerelle de la localisation nominale d'abonné, dans lequel la demande d'activation achemine une adresse de source du dispositif de réseau à localisation itinérante ;
l'envoi, par la première passerelle, d'un premier message de réponse de la demande d'activation renvoyée par la passerelle de la localisation nominale d'abonné au dispositif de réseau à localisation itinérante, et le réacheminement, par le dispositif de réseau à localisation itinérante, du premier message de réponse vers l'équipement utilisateur, dans lequel le premier message de réponse achemine l'adresse de passerelle de la passerelle de la localisation nominale d'abonné ; et
la transmission directe de données, par l'équipement utilisateur, conformément à l'adresse de passerelle de la passerelle de la localisation nominale d'abonné acheminée dans le premier message de réponse et par utilisation de la passerelle de la localisation nominale d'abonné.

3. Procédé selon la revendication 1, dans lequel la transmission de données par utilisation de la passerelle de la localisation nominale d'abonné comprend :
la modification, par la première passerelle, d'une adresse IP de destination contenue dans la demande d'activation en l'adresse de passerelle de la passerelle de la localisation nominale d'abonné, la modification d'une adresse de source du dispositif de réseau à localisation itinérante acheminée dans la demande d'activation en l'adresse de passerelle de la passerelle, et l'envoi d'une demande d'activation modifiée à la passerelle de la localisation nominale d'abonné ;
l'envoi, par la première passerelle, d'un premier message de réponse de la demande d'activation renvoyée par la localisation nominale d'abonné au dispositif de réseau à localisation itinérante, et le réacheminement, par le dispositif de réseau à localisation itinérante, du premier message de réponse vers l'équipement utilisateur, dans lequel le premier message de réponse achemine l'adresse de passerelle de la passerelle ; et
la réception, par la passerelle, d'une demande de service envoyée par l'équipement utilisateur, et l'envoi de la demande de service à la passerelle de la localisation nominale d'abonné de manière à ce que l'équipement utilisateur et la passerelle de la localisation nominale d'abonné transmettent des données par utilisation de la passerelle.

4. Procédé selon la revendication 1, dans lequel la transmission de données par utilisation de la passerelle de la localisation nominale d'abonné comprend :
l'envoi, par la première passerelle, d'un second message de réponse au dispositif de réseau à localisation itinérante, dans lequel le second message de réponse est un message de réponse de la passerelle à la demande d'activation, et le second message de réponse achemine l'adresse de passerelle de la passerelle de la localisation nominale d'abonné ;
l'envoi à nouveau, par le dispositif de réseau à localisation itinérante, de la demande d'activation envoyée par l'équipement utilisateur à la passerelle de la localisation nominale d'abonné, et l'envoi d'une première demande de réponse de la demande d'activation renvoyée par la passerelle de la localisation nominale d'abonné à l'équipement utilisateur, dans lequel la première demande de réponse achemine l'adresse de passerelle de la passerelle de la localisation nominale d'abonné ; et
la transmission directe de données, par l'équipement utilisateur, conformément à l'adresse de passerelle de la passerelle de la localisation nominale d'abonné acheminée dans le premier message de réponse et par utilisation de la passerelle de la localisation nominale d'abonné.

5. Passerelle, comprenant :
une unité de réception (601), configurée pour recevoir une demande d'activation, dans laquelle la demande d'activation comprend au moins une identité d'abonné et un nom de point d'accès, APN, et l'identité d'abonné est utilisée pour identifier une identité d'un équipement utilisateur ;
une unité d'acquisition (602), configurée pour acquérir une adresse de passerelle d'une passerelle d'une localisation nominale d'abonné conformément à l'identité d'abonné et à l'APN contenu dans la demande d'activation ainsi qu'à une relation de mise en correspondance stockée à l'avance dans la première passerelle, dans laquelle la relation de mise en correspondance est une relation entre l'identité d'abonné et l'APN correspondant à l'adresse de passerelle de la passerelle de la localisation nominale d'abonné ; et
une unité de traitement (603), configurée pour transmettre des données par utilisation de la passerelle de la localisation nominale d'abonné.

6. Passerelle selon la revendication 5, dans laquelle l'unité de traitement comprend :
une première unité de modification (703), configurée pour modifier une adresse de protocole Internet IP de destination contenue dans la demande d'activation en l'adresse de passerelle de la passerelle de la localisation nominale d'abonné, et envoyer la demande d'activation à la passerelle de la localisation nominale d'abonné, dans laquelle la demande d'activation achemine une adresse de source d'un dispositif de réseau à localisation itinérante ; et
une unité d'envoi (704), configurée pour l'envoi, par la passerelle, d'un premier message de réponse de la demande d'activation renvoyée par la passerelle de la localisation nominale d'abonné au dispositif de réseau à localisation itinérante, dans laquelle le dispositif de réseau à localisation itinérante réachemine le premier message de réponse vers l'équipement utilisateur, et le premier message de réponse achemine l'adresse de passerelle de la passerelle de localisation nominale d'abonné, de manière à ce que l'équipement utilisateur transmette directement des données conformément à l'adresse de passerelle de la passerelle de la localisation nominale d'abonné acheminée dans le premier message de réponse et par utilisation de la passerelle de la localisation nominale d'abonné.

7. Passerelle selon la revendication 5, dans laquelle l'unité de traitement comprend :
une seconde unité de modification (803), configurée pour modifier une adresse IP de destination contenue dans la demande d'activation en l'adresse de passerelle de la passerelle de la localisation nominale d'abonné, modifier une adresse de source d'un dispositif de réseau à localisation itinérante acheminée dans la demande d'activation en l'adresse de passerelle de la passerelle, et envoyer une demande d'activation modifiée à la passerelle de la localisation nominale d'abonné ;
une unité d'envoi (804), configurée pour envoyer un premier message de réponse de la demande d'activation renvoyée par la localisation nominale d'abonné au dispositif de réseau à localisation itinérante, dans laquelle le dispositif de réseau à localisation itinérante réachemine le premier message de réponse vers l'équipement utilisateur, et le premier message de réponse achemine l'adresse de passerelle de la passerelle ;
une unité de réception, configurée pour recevoir une demande de service envoyée par l'équipement utilisateur ; et
une unité d'envoi, configurée pour envoyer la demande de service à la passerelle de la localisation nominale d'abonné, de manière à ce que des données soient transmises par l'équipement utilisateur et la passerelle de la localisation nominale d'abonné par utilisation de la passerelle.

8. Passerelle selon la revendication 5, dans laquelle l'unité de traitement comprend :
une unité d'envoi (903), configurée pour envoyer un second message de réponse à un dispositif de réseau à localisation itinérante, dans laquelle le second message de réponse est un message de réponse de la passerelle à la demande d'activation, et le second message de réponse achemine l'adresse de passerelle de la passerelle de la localisation nominale d'abonné, de manière à ce que le dispositif de réseau à localisation itinérante envoie à nouveau la demande d'activation envoyée par l'équipement utilisateur à la passerelle de la localisation nominale d'abonné, et envoie une première demande de réponse à la demande d'activation renvoyée par la passerelle de la localisation nominale d'abonné à l'équipement utilisateur, dans laquelle la première demande de réponse achemine l'adresse de passerelle de la passerelle de la localisation nominale d'abonné, et l'équipement utilisateur transmet directement des données conformément à l'adresse de passerelle de la passerelle de la localisation nominale d'abonné acheminée dans le premier message de réponse et par utilisation de la passerelle de la localisation nominale d'abonné.
